# EUROPEAN PATENT APPLICATION

(11) **EP 0 730 896 A2**
(43) Date of publication of application: **11.09.1996**
(21) Application number: 96200538.5
(22) Date of filing: 01.03.1996
(51) Int. Cl.: B01D 39/20, B01D 46/24

(54) **Filter elements**

(30) Priority: 08.03.1995 GB 9504635
(71) Applicant: TENMAT LIMITED, Manchester M3 2NL (GB)
(72) Inventor: Lloyd, Brian Thomas, Weaverham, Cheshire, CW8 3PT (GB)
(74) Representative: Gibson, George Kevin

(57) **Abstract**

A porous filter element comprising at least an elongated, hollow structure closed at one end, arranged so that gases to be cleaned, possibly at high temperatures, are to permeate to the interior of the element before passing through the other open end of the structure, is fabricated from a slurry at least including particles of an anhydrous crystalline mineral of acicular form, such as Wollastonite, by employing known vacuum-forming techniques. The mineral particles desirably have an aspect ratio of at least 10 to 1, and preferably of at least 20 to 1. The increased strength and porosity of such materials of the filter element enable the filter element to have a novel and advantageous re-entrant cross-sectional shape, possibly this shape comprising a multi-pointed star.

## Description

This invention relates to filter elements, especially porous filter elements comprising elongated, hollow structures, each closed at one end. Usually gases to be cleaned, possibly at high temperatures, are to permeate to the interior of the element before passing through the other, open end of the structure. Any unwanted solid material, greater than a predetermined size, in the gases is to be retained by the filter elements.

Usually, a plurality of such filter elements are mounted, spaced apart, and with their longitudinal axes parallel to each other, on a collecting chamber for the gases after having passed through the elements. Means to secure each filter element to the collecting chamber, conveniently, comprises a flange formed integrally with the open end of the element. Periodically, the filter elements are cleaned by passing a gas therethrough in the reverse direction, to cause any solid material accumulated on the elements to be removed.

A gas filtering installation including a plurality of such porous filter elements is required to operate with a predetermined pressure drop across each element, and to be capable of cleaning gases flowing at a predetermined volume per minute. The installation is designed to satisfy these criteria, and the total filtering area of the elements is provided accordingly.

It is known to fabricate such filter elements from a slurry of ceramic fibres, and by employing vacuum-forming techniques. However, the use of ceramic fibres comprises a significant health hazard. Further, when ceramic fibres comprise the material of filter elements such elements are not as strong as is desired, either at ambient temperatures, or at any required, higher operating temperature for the filtering installation, with the result that the wall thicknesses of the filtering parts of the elements have to be fabricated to be thicker than desired.

It is an object of the present invention to provide a filter element comprising an elongated, hollow structure closed at one end, and advantageously of a material not comprising a significant health hazard, and of a strength greater at both ambient and elevated temperatures than has been obtainable previously.

According to the present invention a filter element, comprising at least an elongated, hollow structure closed at one end, is fabricated from a slurry by employing known vacuum-forming techniques, characterised by the slurry at least including particles of an anhydrous crystalline mineral of acicular form.

Such minerals are not a health hazard, are capable of being used satisfactorily at high temperatures if required, and surprisingly filter elements fabricated by using such material are stronger at both ambient temperatures and elevated temperatures than elements including solely ceramic fibres.

Desirably, the mineral particles have an aspect ratio of at least 10 to 1, and preferably of at least 20 to 1.

Conveniently, the mineral is Wollastonite.

The slurry also may include mineral fibres and/or ceramic fibres.

The slurry, in addition, may include a binder system, for example, comprising or including starch, and/or colloidal silica, and/or colloidal alumina, and/or latex.

Materials of filter elements in accordance with the present invention are more porous, and are stronger, than corresponding materials of elements fabricated from a slurry of ceramic fibres alone.

The increased strength of the materials of filter elements in accordance with the present invention implies that the wall thickness of the filtering parts of the elements may be thinner than has been possible heretofore. For a particular gas filtering installation having a plurality of stronger, and more porous filtering elements the pressure drop across each constituent element may be less if the elements are also thinner, and/or the rate of flow of gases therethrough may be greater.

Consequently, smaller elements may be provided, and/or fewer filtering elements may be required, in the filtering installation.

It is known to spray colloidal silica onto filter elements otherwise of conventional materials, which silica hardens to form hard and corrosive resistant coatings. However, for a filter element in accordance with the present invention, which is inherently strong and corrosive resistant, surprisingly, it has been discovered that the provision of a porous coating of colloidal silica, with or without adhesives, sprayed onto the filter, and allowed to solidify, improves the release of surface dust when the filter element is periodically cleaned in a required manner by reversing the direction of flow of the gas therethrough. It is also known to provide a coating of starch on a conventional filter element for this purpose. However, a silica coating on a filter element in accordance with the present invention has the advantage that the filter element will operate satisfactorily with gases to be cleaned at temperatures upto 1000°C, whereas at much lower temperatures a starch coating will decompose. A high operating temperature is advantageous if, otherwise, undesirable solutions, for examples, acids, will condense in the filter, because it obviates the need to remove such waste material. The thickness of the porous silica coating on a filter element in accordance with the present invention easily can be controlled. Thus, a desired thickness for the coating can be chosen suitable for a selected small range of velocities of gas flow through the filter element and within a possible wide range of velocities. Further, the chosen range of velocities can be commensurate with the range of gas densities, and/or with the range of pressure drops across the filter element, normally expected to be encountered.

Additionally, because of the increased strength of the materials of the filter elements in accordance with the present invention the cross-sectional shape of an elongated filter element transverse to its longitudinal axis may have a novel, and advantageous, re-entrant form, so that the filtering area of the element can be greater than otherwise would be the case. Because of this reason, a gas filtering installation may have fewer and/or smaller elements than otherwise would be possible. Conveniently, the re-entrant cross-sectional shape of a filter element comprises a multi-pointed star.

Further, because of the increased strength of the materials of filter elements in accordance with the present invention, the filter elements may have an overall diameter; or length; greater than otherwise would be possible, respectively, enabling a gas filtering installation to have fewer elements, and/or elements of a shorter length; or even fewer elements if longer elements are desired.

The weakest part of a porous filter element of the type to which the present invention relates is the closed end. In order to take full advantage of the increased strength of the materials of filter elements in accordance with the present invention it is required that each element has a closed end part of an advantageously strong construction.

Further, because a filter element in accordance with the present invention is inherently strong the open end of a first, elongated, hollow structure closed at one end may be connected to a second, elongated, hollow structure open at both ends, and fabricated in the same way as the first structure, to form a longer filter element than conveniently can be provided by a single elongated, hollow structure. The adjacent ends of the two hollow structures may be connected together in any convenient manner, for example, by these ends being provided with co-operating screw threads.

The present invention will now be described by way of example with reference to the accompanying drawings, in which
Figure 1 is a cross-sectional side elevation of a known form of porous filter element comprising an elongated, hollow structure closed at one end,
Figure 2 shows a modification of the known filter element of Figure 1, Figure 2 being of a cross-section of the filter element transverse to its longitudinal axis, the cross-sectional shape having the re-entrant form of a multi-pointed star, which shape is possible when the element is of a stronger material in accordance with the present invention,
Figure 3 shows part of another modified filter element having a porous coating of silica thereon, and
Figure 4 shows part of a further modified filter element, the filter element having a first hollow structure closed at one end, and the open end thereof being connected to a second hollow structure open at both ends and fabricated in the same way, the Figure showing the connection between the two structures.

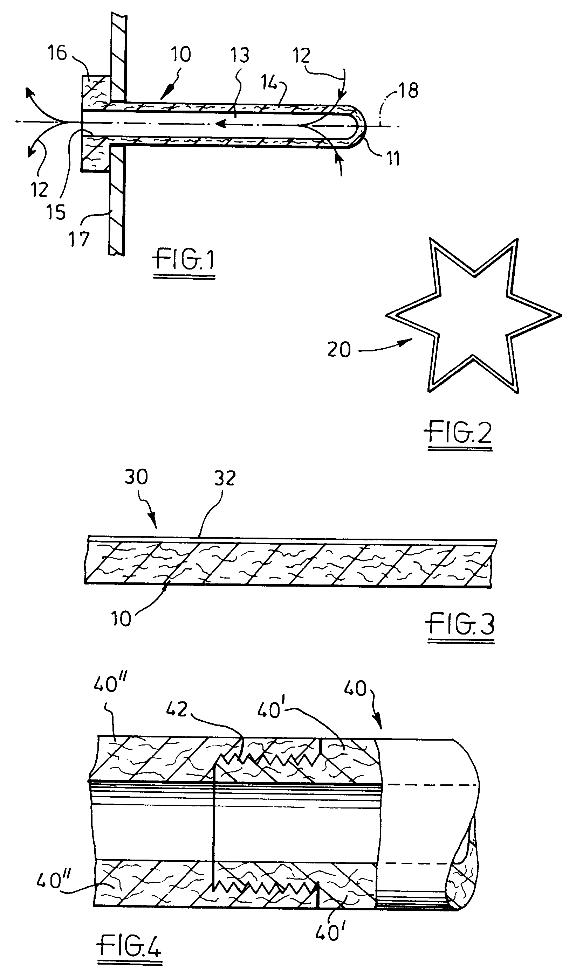

The known porous filter element 10 shown in Figure 1 has an elongated, hollow structure closed at one end 11. A gas to be cleaned, and possibly at a high temperature of, say, 200°C, the direction of flow of which gas is indicated by arrows 12, permeates to the interior 13 of the element 10, through a cylindrically shaped wall 14, before passing through the open end 15 of the element 10. A flange 16 is formed integrally at the open end 15 of the element, and enables the element to be mounted on a collecting chamber for the gases indicated partially at 17. The longitudinal axis of the element 10 is indicated at 18.

The known filter element 10 is fabricated from a slurry of ceramic fibres of an alumino-silicate composition, the element being obtained by employing known vacuum-forming techniques.

A gas filtering installation (not shown) includes a plurality of the filter elements 10 mounted spaced apart on the collecting chamber 17, with their longitudinal axes 18 parallel to each other. As the gas to be cleaned passes through the installation, in the manner indicated for one constituent filter element 10 by the arrows 12, any unwanted solid material carried by the gas, and greater than a predetermined size, is retained by the filter elements. Periodically the filter elements are cleaned by passing a gas therethrough in the opposite direction to the arrows 12, causing any solid material accumulated on the elements to be removed.

The installation operates with a predetermined pressure drop across each filter element 10, and with the gas to be cleaned flowing at a predetermined volume per minute. Thus, the appropriate total filtering area required, comprising the sum of the areas of the cylindrical walls 14 for all the constituent filter elements 10 of the installation, is required to be provided.

In designing some gas filtering installations, in spite of employing ceramic fibres in the filter elements, it is desirable to have stronger filter elements without having to thicken the cylindrical walls 14 of the elements accordingly, because thickening the elements increases the gas pressure drop across the elements, and requires disadvantageously the number of elements to be increased. Alternatively, it is advantageous to have filter elements with thinner cylindrical walls.

It has been found, in accordance with the present invention, that stronger filter elements can be obtained by employing known vacuum-forming techniques on a slurry containing particles of Wollastonite, and that the elements provided are more porous, than elements having the same wall thickness and obtained from a slurry of ceramic fibres. The Wollastonite particles have an aspect ratio of 20 to 1.

Thus, the wall thickness of the cylindrical parts 14 of the elements can be reduced, and there is an advantageous reduction of the gas pressure drop across each constituent element. Consequently, fewer, and/or shorter elements may be provided.

Additionally, because of their stronger materials, filter elements in accordance with the present invention may not be cylindrical in shape, but each element advantageously may have a cross-sectional shape transverse to its longitudinal axis 18 of a re-entrant form, so that the filtering area of the element is increased. Any convenient re-entrant form can be employed, and the form 20 shown in Figure 2 comprises a multi-pointed star. When such a re-entrant cross-sectional shape is employed fewer and/or smaller elements may be employed.

Whether a filter element is cylindrical in shape, or has a cross-sectional shape transverse to its longitudinal axis 18 of a re-entrant form as shown in Figure 2, because of the use of a stronger material in accordance with the present invention the overall diameter and/or length of the element may be increased. If the diameter is increased a gas filtering installation may have fewer and/or shorter elements. If the length of the element is increased fewer elements may be used.

The following Table illustrates the improved properties for a filter element fabricated from a slurry of particles of Wollastonite by employing known vacuum-forming techniques, compared with a known filter element fabricated from a slurry of ceramic fibres.

**Table**

| Slurry Containing | Ceramic | Wollastonite |
|---|---|---|
| Hardness Zwick Durometer Measurement | 30-40 | 55-60 |
| Tensile Strength MPa | 0.6 | 1.3 |
| Flexural Strength MPa | 0.8 | 1.2 |
| Compressive Stress at 30% Deformation MPa | 1.2 | 1.8 |

Filter elements in accordance with the present invention may be fabricated from a slurry of any anhydrous crystalline mineral of acicular form by employing known vacuum-forming techniques, the mineral having an aspect ratio of at least 10 to 1, and preferably of at least 20 to 1.

However, the slurry from which filter elements in accordance with the present invention are formed may also include mineral fibres or ceramic fibres, in addition to acicular particles of an anhydrous crystalline mineral. This facilitates controlling the porosity of the filter elements fabricated therefrom, and surprisingly enhances the filtration efficiency of the elements.

Alternatively, or in addition, the slurry may include a binder system, for example, comprising or including starch, and/or colloidal silica, and/or colloidal alumina, and/or latex.

As shown partially in Figure 3, another modified form 30 of a filter element 10 has a porous coating 32 comprising sprayed and solidified colloidal silica. The provision of the silica coating 32 enhances the release of surface dust when the filter element is periodically cleaned in a required manner by reversing the direction of flow of gas therethrough. The thickness of the coating 32 can be controlled, and any desired thickness can be provided. The chosen thickness can be suitable for a selected small range of velocities of gas flow through the filter element and within a possible wide range of velocities. Such a chosen range of velocities is required to be commensurate with the range of gas densities, and/or with the range of pressure drops across the filter element, normally expected to be encountered. A typical thickness is 12 micrometres.

Another modified form 40 of filter element is shown partially in Figure 4. The filter element comprises a first, elongated, hollow structure 40' having a closed end (not shown in Figure 4 but corresponding to the closed end 11 of the filter element of Figure 1); and a second, elongated, hollow structure 40'' open at both ends. The two structures 40' and 40'' are fabricated in the same way, as described above with reference to the sole hollow structure of the filter element of Figure 1. The open end of the first structure 40' is connected to an end of the second structure 40'' in any convenient manner to form a longer filter element than conveniently can be provided by a single, elongated, hollow structure.

In Figure 4 the two structures 40' and 40'' are connected together by the adjacent ends of the structures being provided with co-operating screw threads 42.

## Claims

1. A filter element comprising at least an elongated, hollow structure closed at one end, is fabricated from a slurry by employing known vacuum-forming techniques, characterised by the slurry at least including particles of an anhydrous crystalline mineral of acicular form.

2. A filter element as claimed in claim 1 characterised in that the mineral particles have an aspect ratio of at least 10 to 1.

3. A filter element as claimed in claim 1 or claim 2 characterised in that the mineral particles have an aspect ratio of at least 20 to 1.

4. A filter element as claimed in any one of the preceding claims characterised in that the mineral is Wollastonite.

5. A filter element as claimed in any one of the preceding claims characterised in that the slurry also includes mineral fibres and/or ceramic fibres.

6. A filter element as claimed in any one of the preceding claims characterised in that the slurry also includes a binder system.

7. A filter element as claimed in any one of the preceding claims characterised by being provided with a porous coating of colloidal silica sprayed onto the filter and allowed to solidify.

8. A filter element as claimed in any one of the preceding claims characterised by having a re-entrant cross-sectional shape transverse to the longitudinal axis of the element.

9. A filter element as claimed in claim 8 characterised in that the cross-sectional shape comprises a multi-pointed star.

10. A filter elements as claimed in any one of the preceding claims characterised in that the open end of a first elongated, hollow structure closed at one end is connected to a second elongated, hollow structure open at both ends, and fabricated in the same way as the first structure.
